# EUROPÄISCHE PATENTSCHRIFT

(11) **EP 3 137 781 B1**
(45) Veröffentlichungstag und Bekanntmachung des Hinweises auf die Patenterteilung: **21.03.2018**
(21) Anmeldenummer: 15736180.9
(22) Anmeldetag: 22.04.2015
(51) Int. Cl.: F16D 13/75, F16D 13/58, F16D 13/70, F16D 13/71

(54) **DECKELANORDNUNG FÜR EINE REIBUNGSKUPPLUNG**
COVER ASSEMBLY FOR A FRICTION CLUTCH
SYSTÈME DE COUVERCLE DESTINÉ À UN EMBRAYAGE À FRICTION

(30) Priorität: 28.04.2014 DE 102014207912
(43) Veröffentlichungstag der Anmeldung: 08.03.2017
(73) Patentinhaber: Schaeffler Technologies AG & Co. KG, 91074 Herzogenaurach (DE)
(72) Erfinder: VOORSPOELS, Ludovic, F-67410 Drusenheim (FR); FOHRER, Thierry, F-67850 Offendorf (FR); MERCKLING, Tony, F-67340 Schillersdorf (FR)
(86) Internationale Anmeldenummer: PCT/DE2015/200273
(87) Internationale Veröffentlichungsnummer: WO 2015/165460

(56) Entgegenhaltungen:
- WO-A1-2013/186046
- DE-A1- 10 208 207
- DE-A1-102009 007 828

## Beschreibung

Die Erfindung betrifft eine Deckelanordnung für eine Reibungskupplung, mit deren Hilfe eine Reibungskupplung zum Kuppeln einer Antriebswelle eines Kraftfahrzeugmotors mit mindestens einer Getriebeeingangswelle eines Kraftfahrzeuggetriebes geöffnet und/oder geschlossen werden kann.

Aus DE 40 13 186 A1 ist eine Deckelanordnung für eine Reibungskupplung bekannt, bei der ein Haltebolzen mit einem Kupplungsdeckel verbunden ist. Mit dem Haltebolzen ist motorseitig eine Stützscheibe verbunden, wobei zwischen der Stützscheibe und dem Kupplungsdeckel zwei ringförmige Kippringe angeordnet sind, zwischen denen ein Betätigungselement in Form einer als Tellerfeder mit Federzungen ausgestalteten Hebelfeder in axialer Richtung unbeweglich aber schwenkbar aufgenommen ist. An einem radial inneren Ende der Federzungen kann eine Betätigungskraft eingeleitet werden, wodurch die Tellerfeder an den Kippringen verschwenkt wird und eine Anpressplatte zum reibschlüssigen Verpressen einer Kupplungsscheibe zwischen der Anpressplatte und einer Gegenplatte zum Öffnen der Kupplung verlagert werden kann. Zusätzlich ist zu den Kippringen radial beabstandet ein Federelement vorgesehen, das an der Stützscheibe und an einem radial äußeren Bereich der Hebelfeder abgestützt ist, so dass durch die Federkraft des Federelements Biegelasten der Hebelfeder im radial äußeren Bereich abgebaut werden können. Aus WO 2013/186 046 A1 ist eine gattungsbildende Deckelanordnung für eine Reibungskupplung bekannt. Es besteht ein ständiges Bedürfnis den Betätigungskomfort zum Betätigen einer Reibungskupplung zu verbessern.

Es ist die Aufgabe Maßnahmen aufzuzeigen, die eine mit einem hohen Betätigungskomfort betätigbare Reibungskupplung ermöglichen.

Die Lösung der Aufgabe erfolgt erfindungsgemäß durch eine Deckelanordnung für eine Reibungskupplung mit den Merkmalen des Anspruchs. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Deckelanordnung für eine Reibungskupplung zum Kuppeln einer Antriebswelle eines Kraftfahrzeugmotors mit mindestens einer Getriebeeingangswelle eines Kraftfahrzeuggetriebes vorgesehen mit einem Kupplungsdeckel zum zumindest teilweisen Abdecken der Reibungskupplung, einem schwenkbaren Betätigungselement, insbesondere Hebelfeber, zum Verlagern einer Anpressplatte zum reibschlüssigen Verpressen einer Kupplungsscheibe zwischen der Anpressplatte und einer Gegenplatte, wobei das Betätigungselement um einen im Wesentlichen ringförmigen Schwenkpunkt schwenkbar ist und einer Servofeder zur Reduzierung einer zum Verlagern der Anpressplatte erforderlichen von einem Betätigungssystem aufbringbare Betätigungskraft bei einem Verschleiß von Reibbelägen, wobei die Servofeder eine sich an einer von dem Betätigungselement wegweisenden Außenseite des Kupplungsdeckels abstützende Stützscheibe aufweist, wobei die Servofeder von der Stützscheibe abstehende durch den Kupplungsdeckel und das Betätigungselement axial hindurchreichende Befestigungsstege aufweist, wobei mit den Befestigungsstegen ein Versteifungselement zum Anschlagen an einer von dem Kupplungsdeckel weg weisenden ersten Axialseite des Betätigungselements bei einem Verschleiß der Reibbeläge verbunden ist, und wobei die Servofeder von der Stützscheibe abstehende durch den Kupplungsdeckel axial hindurchreichende Verstärkungsstege zum Anschlagen an einer zu dem Kupplungsdeckel hin weisenden zweiten Axialseite des Betätigungselements im geöffneten Zustand der Reibungskupplung aufweist.

Das Betätigungselement kann sich bei Einleitung einer Betätigungskraft zum Öffnen und/oder Schließen der Reibungskupplung elastisch verbiegen. Insbesondere wenn das Betätigungselement in der Art einer Tellerfeder ausgestaltet ist, kann sich bei einem hinreichend großen Verschleiß von Reibbelägen der Reibungskupplung und einer damit verbundenen Änderung des Hubwegs der Anpressplatte das tellerfederartige Betätigungselement bei einem Öffnen oder Schließen der Reibungskupplung soweit biegen, dass der tellerfederartige Bereich durchgedrückt wird und die Richtung der Konizität in dem tellerfederartigen Bereich wechselt. Dies führt zu einem Abfall einer der angreifenden Kraft entgegen gerichteten Federkraft des Betätigungselements, wodurch sich die von einem Betätigungssystem oder einer Rückstellfeder aufzubringende Ausrückkraft oder Einrückkraft zum Verlagern der Anpressplatte reduziert und ein Absinken der Ausrückkraftkennlinie ("Drop-Off") auftreten kann. Dies erschwert oder vereitelt es eine bestimmte Axialposition der Anpressplatte automatisch anzufahren, die im unverschlissenen Zustand der Reibungskupplung genau einem bestimmten Betrag der von dem Betätigungssystem aufzubringenden Betätigungskraft entspricht.

Durch die Servofeder kann das Betätigungselement ab einem bestimmten Schwenkwinkel abgestützt werden, so dass beispielsweise zur Kompensierung und/oder Verhinderung eines Drop-Offs von der Servofeder eine der Ausrückkraft entgegen gerichtete Federkraft bereitgestellt werden kann. Hierzu kann das Betätigungselement beim Ausrücken, wenn die Anpressplatte von der geschlossenen Stellung der Reibungskupplung in die geöffnete Stellung der Reibungskupplung verlagert wird, an dem Verstärkungssteg anschlagen. Bei einer weiteren Verlagerung des Betätigungselements muss dann die ansteigende Federkraft des Verstärkungsstegs überwunden werden, wodurch die minimal erforderliche Ausrückkraft entsprechend erhöht wird. Dadurch kann insbesondere ein Abfall der Ausrückkraftkennlinie ("Drop-Off"), der beispielsweise durch eine sich stärker aufstellende Tellerfeder verursacht wird, zumindest teilweise kompensiert werden. Ferner kann bei einem Einrücken, wenn die Anpressplatte von der geöffneten Stellung der Reibungskupplung in die geschlossene Stellung der Reibungskupplung verlagert wird, das Betätigungselement an dem Versteifungselement anschlagen und bei einer weiteren Verlagerung, insbesondere bei einem Verschleiß von Reibbelägen der Reibungskupplung, eine der Einrückkraft entgegen gerichtete Federkraft aufbauen. Ein Durchdrücken des insbesondere in der Art einer Tellerfeder ausgestalteten Betätigungselements kann dadurch vermieden werden. Gleichzeitig kann dadurch die Ausrückkraft bei auftretendem Verschleiß der Reibbeläge reduziert werden. Der Verstärkungssteg und/oder das Versteifungselement können beispielsweise in radialer Richtung, insbesondere radial innerhalb, zu einem Schwenkpunkt des Betätigungselements versetzt an der entsprechenden Axialseite des Betätigungselements angreifen, wodurch gleichzeitig durch den weiteren Anlagepunkt des Betätigungselements eine Versteifung des Betätigungselements erreicht werden kann. Der Betrag der erforderlichen Betätigungskraft, um die Anpressplatte zwischen der geöffneten und der geschlossenen Stellung zu verlagern, kann dadurch über den maximalen Hubweg der Anpressklappe eine vergleichsweise geringe Änderung erfahren und dadurch in einem vergleichweise geringen Wertebereichband bleiben. Dadurch ist es möglich eine Verschleißnachstelleinrichtung zur Kompensation eines sich verschleißbedingt vergrößernden Hubwegs der Anpressplatte, beispielsweise mit Hilfe eines zwischen der Anpressplatte und der Hebelfeder und/oder zwischen der Hebelfeder und dem Kupplungsdeckel vorgesehenen Rampensystems, einzusparen ohne eine zu starke Erhöhung der auftretenden maximal erforderlichen Betätigungskraft in kauf nehmen zu müssen. Durch die Einsparung der Verschleißnachstelleinrichtung kann der Bauraumbedarf der Reibungskupplung reduziert werden. Durch die an beiden Axialseiten des Betätigungselement angreifbare Servofeder ist es möglich gleichzeitig eine erhöhte minimale Betätigungskraft und eine reduzierte maximale Betätigungskraft vorzusehen, wodurch bei einer erhöhten Verschleißreserve eine mit einem hohen Betätigungskomfort betätigbare Reibungskupplung ermöglicht ist.

Das Betätigungselement kann insbesondere als Tellerfeder ausgestaltet sein. Das Betätigungselement kann hierzu beispielsweise als umlaufender konisch ausgeformter Ring ausgestaltet sein. Das Betätigungselement kann insbesondere um einen ringförmig umlaufenden Schwenkpunkt verschwenkt werden, wobei der ringförmig umlaufenden Schwenkpunkt vorzugsweise durch mindestens einen an dem Kupplungsdeckel abgestützten Drahtring definiert wird. Das Federsystem aus Betätigungselement und Servofeder kann insbesondere eine Gesamtfederkennlinie bereitstellen, die im Wesentlichen einer im Vergleich zum Betätigungselement ohne Servofeder steifer ausgeführten Tellerfeder entspricht. Das Betätigungselement kann hierzu beispielsweise einen umlaufenden konisch ausgeformten ringförmigen Tellerfederbereich aufweisen, der insbesondere einen Großteil der Federwirkung des Betätigungselements bereitstellt. Durch von dem Tellerfederbereich radial abstehende Ansätze kann das Betätigungselement beispielsweise verdrehsicher in entsprechende Aussparungen und/oder Vorsprünge der Servofeder oder des Kupplungsdeckel eingelegt werden, um die Montage der Reibungskupplung zu vereinfachen. Ferner kann das Betätigungselement insbesondere nach radial innen abstehende Federzungen aufweisen, über die von einem insbesondere hydraulischen Betätigungssystem eine Betätigungskraft eingeleitet werden kann.

Der Befestigungssteg der Servofeder kann jeweils durch eine zugeordnete Federöffnung in dem Betätigungselement hindurch geführt sein. Die Federöffnung kann als Durchbruch im Material des Betätigungselements ausgestaltet sein, der in axialer Richtung, das heißt im Wesentlichen parallel zur Drehachse der Reibungskupplung, vollständig durchgängig ist. Die Federöffnung kann beispielsweise als eine Öffnung mit einem umlaufend geschlossenen Rand ausgestaltet sein, wobei die Öffnung in diesem Fall beispielsweise als Bohrung oder Ausstanzung ausgestaltet sein kann. Vorzugsweise weist das Betätigungselement im Wesentlichen radial verlaufende Federzungen auf. In diesem Fall ist die Federöffnung insbesondere durch einen zwischen zwei in Umfangsrichtung nachfolgenden Federzungen vorgesehenen Spalt ausgebildet. Die Federöffnung ist dadurch zu einer Radialrichtung hin geöffnet ausgeführt. Durch die Befestigungsstege kann das Betätigungselement insbesondere zentriert und/oder gegen ein Verdrehen gesichert sein. Alternativ kann das Betätigungselement beispielsweise an dem Kupplungsdeckel unmittelbar oder mittelbar, beispielsweise über mit dem Kupplungsdeckel verbundene axial abstehende Zentrierbolzen, zentriert und/oder gegen ein Verdrehen gesichert sein, so dass die Servofeder über die in die korrespondierende Federöffnungen eingesteckten Befestigungsstege zentriert und/oder gegen ein Verdrehen gesichert sein kann. Vorzugsweise sind die Befestigungsstege und die Verstärkungsstege einstückig mit der Stützscheibe ausgestaltet, während das Versteifungselement als separates mit den Befestigungsstegen verbindbares Bauteil ausgestaltet ist. Dadurch kann bei einer geringen Bauteileanzahl eine einfache Montage erreicht werden.

Die Reibungskupplung ist insbesondere als sogenannte gezogene Kupplung ausgestaltet, bei der das Betätigungselement radial innerhalb zu einem Schwenkpunkt des Betätigungselements an der Anpressplatte, insbesondere einem von der Anpressplatte in axialer Richtung abstehenden Anpressplattennocken, angreift, um die Anpressplatte axial zu verlagern. Die Gegenplatte der Reibungskupplung kann insbesondere durch eine Schwungscheibe ausgestaltet sein, die beispielsweise mit einer Kurbelwelle eines Kraftfahrzeugmotors drehfest verbunden sein kann. Insbesondere ist es möglich die Reibungskupplung für eine Doppelkupplung zu verwenden, wobei die Gegenplatte insbesondere durch eine gemeinsame Zentralplatte der Doppelkupplung ausgebildet sein kann, so dass diese Zentralplatte an beiden Axialseiten eine Gegenplatte für jeweils eine Reibungskupplung ausbilden kann. Der Kupplungsdeckel ist vorzugsweise fest mit der Gegenplatte, beispielsweise durch Verschrauben oder Vernieten, verbunden. Insbesondere kann die in axialer Richtung zwischen der Anpressplatte und der Gegenplatte vorgesehene Kupplungsscheibe beispielsweise über eine Steckverzahnung drehfest mit eine Getriebeeingangswelle eines Kraftfahrzeugsgetriebes verbunden werden. Die Kupplungsscheibe kann insbesondere Reibbeläge aufweisen, die über die Lebensdauer verschleißen und dadurch dünner werden können. Vorzugsweise weist die Kupplungsscheibe eine Belagfederung für die Reibbeläge auf, die ein sanftes Schließen der Reibungskupplung ermöglichen und insbesondere im geschlossenen Zustand der Reibungskupplung eine Federkraft zum Öffnen der Reibungskupplung bereitstellen. Insbesondere kann eine Rückstellfeder vorgesehen sein, die bei einer nachlassenden oder fehlenden Betätigungskraft die Anpressplatte und damit das Betätigungselement in eine definierte Ausgangslage zurückbewegt, in welcher die Reibungskupplung geöffnet oder geschlossen ist. Je nachdem, ob die Reibungskupplung ohne angreifende Betätigungskraft geschlossen ("normally closed") oder offen ("normally open") ist, kann das Versteifungselement oder der Verstärkungssteg eine der Betätigungskraft entgegen gerichtete Federkraft, insbesondere bei Verschleiß von Reibbelägen der Reibungskupplung, aufbringen, während der Verstärkungssteg oder das Versteifungselement bei fehlender Betätigungskraft ein in Richtung der Betätigungskraft gerichtete Vorspannung auf das Betätigungselement aufbringen kann. Durch die an beiden Axialseiten des Betätigungselements angreifbaren Servofeder kann die minimal erforderliche Betätigungskraft erhöht und ein Absinken der Betätigungskraftkennlinie im Verschleiß zumindest reduziert werden.

Der Kupplungsdeckel kann insbesondere direkt oder indirekt mit einer Gegenplatte der Reibungskupplung verbunden werden, über die ein insbesondere von einem Kraftfahrzeugmotor bereitgestelltes Drehmoment in die Reibungskupplung eingeleitet werden kann. Der Kupplungsdeckel ist vorzugsweise getriebeseitig an einer im eingebauten Zustand zu einem Kraftfahrzeuggetriebe weisenden Seite der Reibungskupplung vorgesehen. Der Kupplungsdeckel kann insbesondere eine zum Betätigungselement weisende Ausprägung zum Ausbilden des Schwenkpunkts aufweisen. Die Ausprägung kann auch zur Befestigung eines insbesondere als geschlossener Drahtring ausgestalteten Kipprings verwendet werden, wobei der Kippring den insbesondere im Wesentlichen ringförmigen Schwenkpunkt für das Betätigungselement ausbildet. Der Kupplungsdeckel kann auch einen zum Betätigungselement weisenden, insbesondere durch das Betätigungselement hindurchragenden Haken aufweisen, wobei der Haken mindestens einen Kippring zur Bereitstellung des Schwenkpunkts aufnimmt. Insbesondere kann der Haken zwei Kippringe aufnehmen, zwischen denen das Betätigungselement beidseitig kippbar gelagert ist. Zusätzlich oder alternativ kann der Haken durch einen mit dem Kupplungsdeckel verbundener Haltebolzen zur Aufnahme mindestes eines Kipprings, vorzugsweise von zwei Kippringen, zur Bereitstellung des Schwenkpunkts ersetzt sein.

Insbesondere spannen die Verstärkungsstege im geöffneten Zustand der Reibungskupplung das Betätigungselement von dem Kupplungsdeckel weg vor. Bei einer als "normally open" ausgestalteten Reibungskupplung können die Verstärkungsstege mit einer Federkraft in Einrückrichtung und eine beispielsweise als Blattfeder ausgestaltete Rückstellfeder mit einer Federkraft in Ausrückrichtung angreifen, so dass das Betätigungselement in einer definierten axialen Ausgangslage festgehalten ist. Durch das Betätigungselement verursachte Klappergeräusche, wenn keine von einem Betätigungssystem aufgebrachte Betätigungskraft wirkt, können dadurch vermieden werden. Ferner kann durch die Vorspannung ein Drop-Off der Ausrückkraft zumindest gemindert werden.

Vorzugsweise ist das Versteifungselement in Umfangsrichtung geschlossen ausgestaltet. Das Versteifungselement kann dadurch als ein geschlossener Ring ausgestaltet sein, der insbesondere an abstehenden Federzungen des Betätigungselements anliegen kann. Eine nach radial innen geöffnete Federöffnung in dem Betätigungselement zum Hindurchführen des zugeordneten Befestigungsstegs kann durch das Versteifungselement nach radial innen begrenzt werden. Das Versteifungselement kann dadurch im Wesentlichen steif ausgeführt sein, so dass eine über das Versteifungselement an dem Betätigungselement angreifende Federkraft im Wesentlichen durch eine elastische Verformung der Befestigungsstege erreicht werden kann. Die Befestigungsstege können hierbei im Wesentlichen in Längsrichtung belastet werden, wodurch eine entsprechend hohe Federkraft bereitgestellt werden kann ohne ein Bauteilversagen des Versteifungselements oder der Befestigungsstege befürchten zu müssen.

Besonders bevorzugt weist das Versteifungselement eine Versteifungsanlagekuppe zum Abrollen an der ersten Axialseite des Betätigungselements bei einem Verschwenken des Betätigungselements und/oder der Verstärkungssteg eine Verstärkungsanlagekuppe zum Abrollen an der zweiten Axialseite des Betätigungselements bei einem Verschwenken des Betätigungselements auf. Über die jeweilige Kuppe des Versteifungselements und des Verstärkungsstegs kann ein Abrollen an der jeweiligen Axialseite des Betätigungselements bei einem Verschwenken des Betätigungselements erfolgen. Dadurch kann bei einer sich ändernden Relativwinkellage des Betätigungselements zu dem Versteifungselement und zu dem Verstärkungsstegs bei einer axialen Verlagerung der Anpressplatte ein definiertes Anliegen des Versteifungselement beziehungsweise des Verstärkungsstegs erfolgen. Ein ungewolltes Blockieren oder Abheben des Versteifungselements und/oder des Verstärkungsstegs kann dadurch vermieden werden. Ferner kann ein im Wesentlichen linienförmiger Kontakt des Versteifungselements und/oder des Verstärkungsstegs an der jeweiligen Axialseite des Betätigungselements vorgesehen sein, so dass unnötige Reibungseffekte durch eine Schwenkbewegung des Betätigungselements vermieden werden können.

Insbesondere liegt zwischen einer Offenstellung α₀ der Reibungskupplung und einem ersten Schwenkwinkel α₁ das Betätigungselement an dem mindestens einen Verstärkungssteg und zwischen einem zweiten Schwenkwinkel α₂ und einer Schließstellung α_{S,max} bei maximalem Verschleiß an dem Versteifungselement an, wobei α₂ ≤ α₁ gilt, wenn der erste Schwenkwinkel α₁ und der zweiten Schwenkwinkel α₂ beginnend von der Offenstellung α₀ gemessen sind. Dadurch kann das Betätigungselement über den maximalen Schwenkwinkelbereich an der Servofeder anliegen, wobei das Betätigungselement bei einzelnen Schwenkwinkeln über dem Schwenkbereich hierbei entweder nur an dem Verstärkungssteg, nur an dem Versteifungselement oder sowohl an dem Verstärkungssteg als auch an dem Versteifungselement anliegt. Dadurch kann die Servofeder über den gesamten Schwenkbereich des Betätigungselements insbesondere zumindest mit einer minimalen Federkraft an dem Betätigungselement angreifen, so dass die relative Bewegbarkeit der Servofeder relativ zum Kupplungsdeckel minimiert sein kann. Klappergeräusche der Servofeder können dadurch vermieden werden.

Vorzugsweise ist die Stützscheibe um einen in Umfangsrichtung verlaufenden Servoschwenkpunkt kippbar an dem Kupplungsdeckel abgestützt ist, wobei die Befestigungsstege und die Verstärkungsstege radial innerhalb oder radial außerhalb zum Servoschwenkpunkt von der Stützscheibe abstehen. Die Stützscheibe kann hierbei vergleichbar zu einem zweiseitigen Hebel in der Art einer Wippe, sich radial innerhalb zum Servoschwenkpunkt und/oder radial außerhalb zum Servoschwenkpunkt an dem Kupplungsdeckel abstützen, um die auftretenden Kräfte bei einer elastische Verformung der Befestigungsstege und/oder der Verstärkungsstege an den Kupplungsdeckel abtragen zu können.

Besonders bevorzugt weist das Betätigungselement einen in Umfangsrichtung geschlossenen ringförmigen Tellerfederkörper zur Bereitstellung einer Tellerfederkraft und von dem Tellerfederkörper nach radial innen abstehende Federzungen zum Einleiten einer Betätigungskraft zum Verschwenken des Betätigungselements auf, wobei der jeweilige Befestigungssteg zwischen zwei in Umfangsrichtung nachfolgende Federzungen hindurch geführt ist. Dadurch kann für das Hindurchführen der Befestigungsstege durch das Betätigungselement eine sowie in dem Betätigungselement vorgesehene Aussparung verwendet werden, so dass es nicht erforderlich ist die Geometrie des Betätigungselements an die Geometrie der Servofeder anpassen zu müssen.

Insbesondere ist das Versteifungselement mit dem Befestigungssteg über eine durch eine Relativdrehung in Umfangsrichtung verbindbare Steckverbindung in axialer Richtung verliersicher befestigt. Bei der Montage der Deckelanordnung kann dadurch zunächst die Servofeder ohne das Versteifungselement mit dem Kupplungsdeckel montiert werden und nachfolgend das Betätigungselement eingelegt werden. Nachfolgend kann das Versteifungselement auf das Betätigungselement aufgesetzt werden und durch eine Drehbewegung in Umfangsrichtung mit Hilfe der Steckverbindung mit den Befestigungsstegen verbunden werden. Hierbei kann beispielsweise ein Steckbolzen des Versteifungselements und/oder des Befestigungsstegs tangential in eine Stecköffnung des Befestigungsstegs und/oder des Versteifungselements eingesetzt werden. Hierbei wird die Erkenntnis ausgenutzt, dass bei einer axialen Verlagerung der Anpressplatte mit Hilfe des Betätigungselements im Wesentlichen nur Kräfte in axialer Richtung auf das Versteifungselement wirken und die bei der Montage einfach herzustellende Steckverbindung im Betrieb nicht gelöst wird.

Vorzugsweise weist die Steckverbindung einen Steckbolzen mit einer von der Kreisform abweichenden Querschnittsfläche und eine zu der Querschnittsfläche des Steckbolzens korrespondierende Stecköffnung auf. Ein Verdrehen des Versteifungselements relativ zu den Befestigungsstegen um eine in tangentialer Richtung oder in Umfangsrichtung verlaufene Achse kann dadurch vermieden werden. Dadurch ist es insbesondere möglich, dass das Versteifungselement in radialer Richtung, insbesondere nach radial innen, zu den Befestigungsstegen beabstandet an dem Betätigungselement anliegen kann, ohne dass in der Steckverbindung angreifende Hebelkräfte das Versteifungselement relativ zu den Befestigungsstegen verdrehen und eine sich aufbauende Federkraft von dem Versteifungselement auf das Betätigungselement reduziert wird.

Die Erfindung betrifft ferner eine Reibungskupplung zum Kuppeln einer Antriebswelle eines Kraftfahrzeugmotors mit mindestens einer Getriebeeingangswelle eines Kraftfahrzeuggetriebes mit einer Anpressplatte zum reibschlüssigen Verpressen einer Kupplungsscheibe zwischen der Anpressplatte und einer Gegenplatte und einer Deckelanordnung, die insbesondere wie vorstehend beschrieben aus- und weitergebildet sein kann, wobei insbesondere das Betätigungselement an einem Betätigungsnocken der Anpressplatte anliegt. Durch die an beiden Axialseiten des Betätigungselement angreifbare Servofeder der Deckelanordnung ist es möglich gleichzeitig eine erhöhte minimale Betätigungskraft und eine reduzierte maximale Betätigungskraft vorzusehen, wodurch bei einer erhöhten Verschleißreserve eine mit einem hohen Betätigungskomfort betätigbare Reibungskupplung ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht eines Teils einer Reibungskupplung,
- Fig. 2:: eine schematische perspektivische Ansicht einer Servofeder einer Deckelanordnung der Reibungskupplung aus Fig. 1 und
- Fig. 3:: eine schematische perspektivische Detailansicht der Servofeder aus Fig. 2.

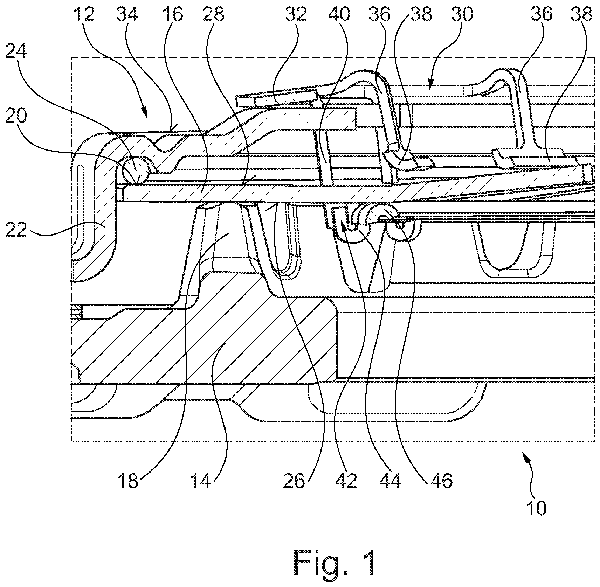

Die in Fig. 1 dargestellte Reibungskupplung 10 weist eine Deckelanordnung 12 auf, mit deren Hilfe eine Anpressplatte 14 axial verlagert werden kann. Hierzu kann ein im Wesentlichen als Tellerfeder ausgestaltetes Betätigungselement 16 an einem Anpressplattennocken 18 der Anpressplatte 14 radial innerhalb zu einem in Umfangsrichtung verlaufenden Schwenkpunkt 20 angreifen. Der Schwenkpunkt 20 für das Betätigungselement 16 wird durch einen in einem Kupplungsdeckel 22 eingesetzten als geschlossener Drahtring ausgestalteten Kippring 24 ausgebildet. Das Betätigungselement 16 weist eine zur Anpressplatte 14 weisende erste Axialseite 26 und eine zum Kupplungsdeckel 22 weisende zweite Axialseite 28 auf.

An dem Betätigungselement 16 kann eine Servofeder 30 angreifen, die über eine im Wesentlichen ringförmige Stützscheibe 32 an einer von der Anpressplatte 14 und dem Betätigungselement 16 wegweisenden Außenseite 34 des Kupplungsdeckels 22 kippbar abgestützt ist. Von einem radial inneren Rand der Stützscheibe 32 stehen mehrere Verstärkungsstege 36 ab, die jeweils an ihrem abstehenden Ende in einer Verstärkungsanlagekuppe 38 enden. Die jeweilige Verstärkungsanlagekuppe 38 kann bei einem entsprechenden Schwenkwinkel des Betätigungselements 16 beim Öffnen der Reibungskupplung 10 an der zweiten Axialseite 28 des Betätigungselements 16 federnd anschlagen, um einen Abfall der Ausrückkraft zumindest teilweise zu kompensieren.

Von dem radial inneren Rand der Stützscheibe 32 stehen ferner mehrere Befestigungsstege 40 ab, die jeweils an ihrem abstehenden Ende über eine Steckverbindung 42 mit einem Versteifungselement 44 in axialer Richtung verliersicher befestigt sind. Das Versteifungselement 44 weist eine Versteifungsanlagekuppe 46 auf, die bei einem entsprechenden Schwenkwinkel des Betätigungselements 16 beim Schließen der Reibungskupplung 10 an der ersten Axialseite 26 des Betätigungselements 16 federnd anschlagen kann, um beispielsweise ein Durchdrücken des tellerfederartig ausgestalteten Betätigungselements 16 bei einem besonders großen Hubweg der Anpressplatte 14, wenn Reibbeläge der Reibungskupplung entsprechend stark verschlissen sind, zu verhindern.

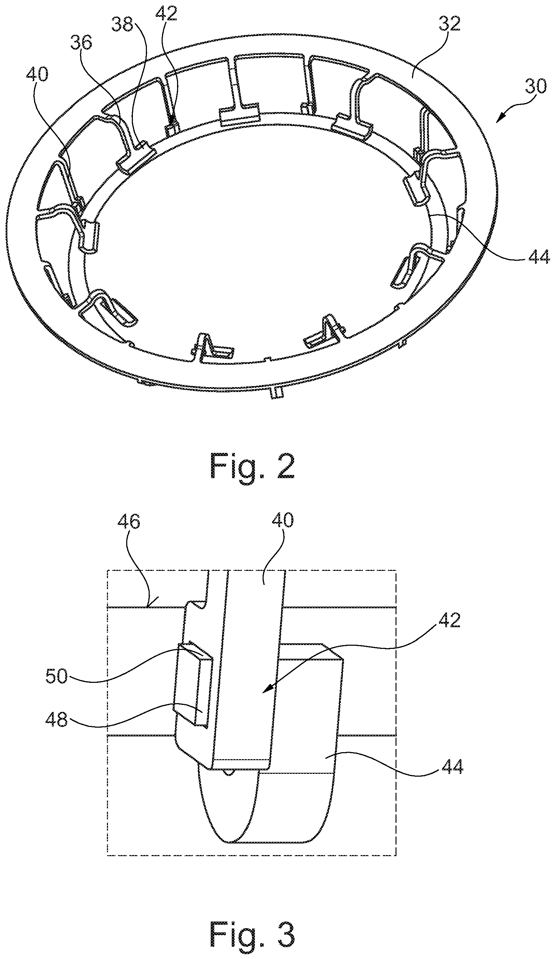

Wie in Fig. 2 dargestellt kann das Versteifungselement 44 als ein in Umfangsrichtung geschlossener Ring ausgestaltet sein. Zwischen dem Versteifungselement 44 und der Stützscheibe 32 kann das Betätigungselement 16 in axialer Richtung verliersicher aufgenommen sein. Zudem können die durch das Betätigungselement 16 in axialer Richtung hindurchreichenden Befestigungsstege 40 eine Verdrehsicherung für das Betätigungselement 16 ausbilden. In diesem Fall ist die Servofeder 30 vorzugsweise verdrehsicher an dem Kupplungsdeckel 22 abgestützt.

Wie in Fig. 3 dargestellt kann die Steckverbindung 42 dadurch ausgebildet werden, dass das Versteifungselement 44 einen in tangentialer Richtung abstehenden Steckbolzen 48 aufweist, der durch eine Relativdrehung des Versteifungselements 44 zu den Befestigungsstegen 36 in eine korrespondierende Stecköffnung 50 des jeweiligen Befestigungsstegs 40 eingesteckt werden kann. Der Steckbolzen 48 und die Stecköffnung 50 weisen eine im Wesentlichen quadratische Querschnittsfläche auf, die von einer Kreisform abweicht und dadurch ein Verdrehen des Steckbolzens 48 in der Stecköffnung 50 blockieren kann.

### Bezugszeichenliste

- 10: Reibungskupplung
- 12: Deckelanordnung
- 14: Anpressplatte
- 16: Betätigungselement
- 18: Anpressplattennocken
- 20: Schwenkpunkt
- 22: Kupplungsdeckel
- 24: Kippring
- 26: erste Axialseite
- 28: zweite Axialseite
- 30: Servofeder
- 32: Stützscheibe
- 34: Außenseite
- 36: Verstärkungssteg
- 38: Verstärkungsanlagekuppe
- 40: Befestigungssteg
- 42: Steckverbindung
- 44: Versteifungselement
- 46: Versteifungsanlagekuppe
- 48: Steckbolzen
- 50: Stecköffnung

## Patentansprüche

1. Deckelanordnung für eine Reibungskupplung (10) zum Kuppeln einer Antriebswelle eines Kraftfahrzeugmotors mit mindestens einer Getriebeeingangswelle eines Kraftfahrzeuggetriebes, mit
einem Kupplungsdeckel (22) zum zumindest teilweisen Abdecken der Reibungskupplung (10),
einem schwenkbaren Betätigungselement (16), insbesondere Hebelfeder zum Verlagern einer Anpressplatte (14) zum reibschlüssigen Verpressen einer Kupplungsscheibe zwischen der Anpressplatte (14) und einer Gegenplatte, wobei das Betätigungselement (16) um einen im Wesentlichen ringförmigen Schwenkpunkt (20) schwenkbar ist und
einer Servofeder (30) zur Reduzierung einer zum Verlagern der Anpressplatte (14) erforderlichen von einem Betätigungssystem aufbringbare Betätigungskraft bei einem Verschleiß von Reibbelägen,
wobei die Servofeder (30) eine sich an einer von dem Betätigungselement (16) wegweisenden Außenseite (34) des Kupplungsdeckels (22) abstützende Stützscheibe (32) aufweist,
wobei die Servofeder (30) von der Stützscheibe (32) abstehende durch den Kupplungsdeckel (22) und das Betätigungselement (16) axial hindurchreichende Befestigungsstege (40) aufweist,
wobei mit den Befestigungsstegen (40) ein Versteifungselement (44) zum Anschlagen an einer von dem Kupplungsdeckel (22) weg weisenden ersten Axialseite (26) des Betätigungselements (16) bei einem Verschleiß der Reibbeläge verbunden ist,
**dadurch gekennzeichnet, dass** die Servofeder (30) von der Stützscheibe (32) abstehende durch den Kupplungsdeckel (22) axial hindurchreichende Verstärkungsstege (36) zum Anschlagen an einer zu dem Kupplungsdeckel (22) hin weisenden zweiten Axialseite (28) des Betätigungselements (16) im geöffneten Zustand der Reibungskupplung (10) aufweist.

2. Deckelanordnung nach Anspruch 1 **dadurch gekennzeichnet, dass** die Verstärkungsstege (36) im geöffneten Zustand der Reibungskupplung (10) das Betätigungselement (16) von dem Kupplungsdeckel (22) weg vorspannen.

3. Deckelanordnung nach Anspruch 1 oder 2 **dadurch gekennzeichnet, dass** das Versteifungselement (44) in Umfangsrichtung geschlossen ausgestaltet ist.

4. Deckelanordnung nach einem der Ansprüche 1 bis 3 **dadurch gekennzeichnet, dass** das Versteifungselement (44) eine Versteifungsanlagekuppe (46) zum Abrollen an der ersten Axialseite (26) des Betätigungselements (16) bei einem Verschwenken des Betätigungselements (16) und/oder der Verstärkungssteg (36) eine Verstärkungsanlagekuppe (38) zum Abrollen an der zweiten Axialseite (28) des Betätigungselements (16) bei einem Verschwenken des Betätigungselements (16) aufweist.

5. Deckelanordnung nach einem der Ansprüche 1 bis 4 **dadurch gekennzeichnet, dass** zwischen einer Offenstellung α₀ der Reibungskupplung (10) und einem ersten Schwenkwinkel α₁ das Betätigungselement (16) an dem mindestens einen Verstärkungssteg (36) und zwischen einem zweiten Schwenkwinkel α₂ und einer Schließstellung a_{S,max} bei maximalem Verschleiß an dem Versteifungselement (44) anliegt, wobei α₂ ≤ α₁ gilt, wenn der erste Schwenkwinkel α₁ und der zweiten Schwenkwinkel α₂ beginnend von der Offenstellung α₀ gemessen sind.

6. Deckelanordnung nach einem der Ansprüche 1 bis 5 **dadurch gekennzeichnet, dass** die Stützscheibe (32) um einen in Umfangsrichtung verlaufenden Servoschwenkpunkt kippbar an dem Kupplungsdeckel (22) abgestützt ist, wobei die Befestigungsstege (40) und die Verstärkungsstege (36) radial innerhalb oder radial außerhalb zum Servoschwenkpunkt von der Stützscheibe (32) abstehen.

7. Deckelanordnung nach einem der Ansprüche 1 bis 6 **dadurch gekennzeichnet, dass** das Betätigungselement (16) einen in Umfangsrichtung geschlossenen ringförmigen Tellerfederkörper zur Bereitstellung einer Tellerfederkraft und von dem Tellerfederkörper nach radial innen abstehende Federzungen zum Einleiten einer Betätigungskraft zum Verschwenken des Betätigungselements (16) aufweist, wobei der jeweilige Befestigungssteg (40) zwischen zwei in Umfangsrichtung nachfolgende Federzungen hindurch geführt ist.

8. Deckelanordnung nach einem der Ansprüche 1 bis 7 **dadurch gekennzeichnet, dass** das Versteifungselement (44) mit dem Befestigungssteg (40) über eine durch eine Relativdrehung in Umfangsrichtung verbindbare Steckverbindung (42) in axialer Richtung verliersicher befestigt ist.

9. Deckelanordnung nach Anspruch 8 **dadurch gekennzeichnet, dass** die Steckverbindung (42) einen Steckbolzen (48) mit einer von der Kreisform abweichenden Querschnittsfläche und eine zu der Querschnittsfläche des Steckbolzens (48) korrespondierende Stecköffnung (50) aufweist.

10. Reibungskupplung zum Kuppeln einer Antriebswelle eines Kraftfahrzeugmotors mit mindestens einer Getriebeeingangswelle eines Kraftfahrzeuggetriebes mit einer Anpressplatte (14) zum reibschlüssigen Verpressen einer Kupplungsscheibe zwischen der Anpressplatte (14) und einer Gegenplatte und einer Deckelanordnung (12) nach einem der Ansprüche 1 bis 9, wobei insbesondere das Betätigungselement (16) an einem Betätigungsnocken (18) der Anpressplatte (14) anliegt.

## Claims

1. Cover arrangement for a friction clutch (10) for coupling a drive shaft of a motor vehicle engine to at least one transmission input shaft of a motor vehicle transmission, having
a clutch cover (22) for covering the friction clutch (10) at least partially,
a pivotable actuating element (16), in particular a lever spring, for moving a pressure plate (14) for pressing a clutch disc in a frictionally locking manner between the pressure plate (14) and a counterplate, it being possible for the actuating element (16) to be pivoted about a substantially annular pivot point (20), and
a servo spring (30) for reducing an actuating force which is required for moving the pressure plate (14) and can be applied by an actuating system, in the case of wear of friction linings,
the servo spring (30) having a supporting disc (32) which is supported on an outer side (34) of the clutch cover (22), which outer side (34) points away from the actuating element (16),
the servo spring (40) having fastening webs (40) which project from the supporting disc (32) and reach axially through the clutch cover (22) and the actuating element (16),
a reinforcing element (44) for coming into contact with a first axial side (26) of the actuating element (16), which first axial side (26) points away from the clutch cover (22), in the case of wear of the friction linings being connected to the fastening webs (40), **characterized in that**
the servo spring (30) has reinforcing webs (36) which project from the supporting disc (32) and reach axially through the clutch cover (22) for coming into contact with a second axial side (28) of the actuating element (16), which second axial side (28) points towards the clutch cover (22), in the open state of the friction clutch (10).

2. Cover arrangement according to Claim 1, **characterized in that** the reinforcing webs (36) prestress the actuating element (16) away from the clutch cover (22) in the open state of the friction clutch (10).

3. Cover arrangement according to Claim 1 or 2, **characterized in that** the reinforcing element (44) is of closed configuration in the circumferential direction.

4. Cover arrangement according to one of Claims 1 to 3, **characterized in that** the reinforcing element (44) has a reinforcing bearing dome (46) for rolling on the first axial side (26) of the actuating element (16) during pivoting of the actuating element (16), and/or the reinforcing web (36) has a reinforcing bearing dome (38) for rolling on the second axial side (28) of the actuating element (16) during pivoting of the actuating element (16).

5. Cover arrangement according to one of Claims 1 to 4, **characterized in that** the actuating element (16) bears against the at least one reinforcing web (36) between an open position α₀ of the friction clutch (10) and a first pivoting angle α₁, and bears against the reinforcing element (44) between a second pivoting angle α₂ and a closed position a_{S,max} in the case of maximum wear, it being the case that α₂ ≤ α₁ if the first pivoting angle α₁ and the second pivoting angle α₂ are measured starting from the open position α₀.

6. Cover arrangement according to one of Claims 1 to 5, **characterized in that** the supporting disc (32) is supported on the clutch cover (22) such that it can be tilted about a servo pivot point which runs in the circumferential direction, the fastening webs (40) and the reinforcing webs (36) projecting from the supporting disc (32) radially inside or radially outside the servo pivot point.

7. Cover arrangement according to one of Claims 1 to 6, **characterized in that** the actuating element (16) has an annular cup spring body which is closed in the circumferential direction for providing a cup spring force, and spring tongues which project radially to the inside from the cup spring body for introducing an actuating force for pivoting the actuating element (16), the respective fastening web (40) being guided through between two following spring tongues in the circumferential direction.

8. Cover arrangement according to one of Claims 1 to 7, **characterized in that** the reinforcing element (44) is fastened captively in the axial direction to the fastening web (40) via a plug-in connection (42) which can be connected by way of a relative rotation in the circumferential direction.

9. Cover arrangement according to Claim 8, **characterized in that** the plug-in connection (42) has a plug-in pin (48) with a cross-sectional area which differs from the circular shape, and a plug-in opening (50) which corresponds to the cross-sectional area of the plug-in pin (48).

10. Friction clutch for coupling a drive shaft of a motor vehicle engine to at least one transmission input shaft of a motor vehicle transmission having a pressure plate (14) for pressing a clutch disc in a frictionally locking manner between the pressure plate (14) and a counterplate, and having a cover arrangement (12) according to one of Claims 1 to 9, the actuating element (16), in particular, bearing against an actuating cam (18) of the pressure plate (14).

## Revendications

1. Ensemble de couvercle pour embrayage (10) à friction destiné à accoupler un arbre d'entraînement du moteur d'un véhicule automobile à un arbre d'entrée de la transmission d'un véhicule automobile et présentant
un couvercle d'embrayage (22) qui recouvre au moins en partie l'embrayage (10) à friction,
un élément pivotant d'actionnement (16), en particulier un ressort à levier, qui déplace une plaque de poussée (14) en vue de repousser par contact de frottement un disque d'embrayage entre la plaque de poussée (14) et une plaque complémentaire, l'élément d'actionnement (16) pouvant pivoter autour d'un point de pivotement (20) essentiellement annulaire et
un servo-ressort (30) qui réduit la force d'actionnement nécessaire qu'un système d'actionnement peut appliquer pour déplacer la plaque de poussée (14) en cas d'usure des garnitures de frottement,
le servo-ressort (30) présentant un disque d'appui (32) qui s'appuie sur un côté extérieur (34) du couvercle d'embrayage (22) non tourné vers l'élément d'actionnement (16),
le servi-ressort (30) présentant des nervures de fixation (40) qui débordent du disque de soutien (32) et qui traversent le couvercle d'embrayage (22) et l'élément d'actionnement (16),
un élément de renfort (44) destiné à venir buter contre un premier côté axial (26) de l'élément d'actionnement (16) non tourné vers le couvercle d'embrayage (22) en cas d'usure des garnitures de frottement,
**caractérisé en ce que**
le servo-ressort (30) présente des nervures de renfort (36) qui débordent du disque d'appui (32) et qui traversent axialement le couvercle d'embrayage (22) en vue de venir buter contre un deuxième côté axial (28) de l'élément d'actionnement (16), tourné vers le couvercle d'embrayage (22), lorsque l'embrayage à frottement (10) est en position ouverte.

2. Ensemble de couvercle selon la revendication 1, **caractérisé en ce que** les nervures de renfort (36) pré-contraignent l'élément d'actionnement (16) à s'éloigner du couvercle d'embrayage (22) lorsque l'embrayage à frottement (10) est en position ouverte.

3. Ensemble de couvercle selon les revendications 1 ou 2, **caractérisé en ce que** l'élément de renfort (44) est fermé dans la direction périphérique.

4. Ensemble de couvercle selon l'une des revendications 1 à 3, **caractérisé en ce que** l'élément de renfort (44) présente un dôme de renfort (46) qui roule sur le premier côté axial (26) de l'élément d'actionnement (16) lors du pivotement de l'élément d'actionnement (16) et/ou **en ce que** la nervure de renfort (36) présente un dôme de renfort (38) qui roule sur le deuxième côté axial (28) de l'élément d'actionnement (16) lors du pivotement de l'élément d'actionnement (16).

5. Ensemble de couvercle selon l'une des revendications 1 à 4, **caractérisé en ce que** l'élément d'actionnement (16) repose contre la ou les nervures de renfort (16) entre une position ouverte α₀ de l'embrayage à frottement (10) et un premier angle de pivotement α₁ et **en ce qu'**il repose contre l'élément de renfort (44) entre un deuxième angle de pivotement α₂ et une position de fermeture α_{S,max} lorsque l'usure est maximale, avec α₂ ≤ α₁ lorsque le premier angle de pivotement α₁ et le deuxième angle de pivotement α₂ sont mesurés à partir de la position ouverte α₀.

6. Ensemble de couvercle selon l'une des revendications 1 à 5, **caractérisé en ce que** le disque d'appui (32) s'appuie sur le couvercle d'embrayage (22) en pouvant basculer autour d'un point de servo-pivotement s'étendant dans la direction périphérique, les nervures de fixation (40) et les nervures de renfort (36) débordant radialement vers l'intérieur ou radialement vers l'extérieur du disque d'appui (32) en direction du point de servo-pivotement.

7. Ensemble de couvercle selon l'une des revendications 1 à 6, **caractérisé en ce que** l'élément d'actionnement (16) présente un corps annulaire de ressort en plateau, fermé dans la direction périphérique et qui applique une force élastique de plateau, et des languettes élastiques qui débordent radialement vers l'intérieur partant du corps de ressort en plateau et qui appliquent une force d'actionnement qui fait pivoter l'élément d'actionnement (16), la nervure de fixation (40) concernée étant guidée entre deux languettes élastiques successives dans la direction périphérique.

8. Ensemble de couvercle selon l'une des revendications 1 à 7, **caractérisé en ce que** l'élément de renfort (44) est fixé par la nervure de fixation (40) de manière à ne pouvoir pas se détacher dans la direction axiale, par l'intermédiaire d'une liaison enfichable (42) qui peut être reliée par une rotation relative dans la direction périphérique.

9. Ensemble de couvercle selon la revendication 8, **caractérisé en ce que** la liaison enfichable (42) présente un goujon d'enfichage (48) dont la surface de la section transversale diffère d'une forme circulaire et une ouverture d'enfichage (50) correspondant à la surface de la section transversale du goujon d'enfichage (48).

10. Embrayage à frottement destiné à accoupler l'arbre d'entraînement du moteur d'un véhicule automobile à au moins un arbre de sortie de la transmission du véhicule automobile, présentant une plaque de poussée (14) repousse en correspondance par frottement un disque d'embrayage entre la plaque de poussée (14) et une plaque complémentaire, et un ensemble de couvercle (12) selon l'une des revendications 1 à 9, l'élément d'actionnement (16) reposant en particulier sur une came d'actionnement (18) de la plaque de poussée (14).
